# EUROPÄISCHE PATENTSCHRIFT

(11) **EP 1 103 394 B1**
(45) Veröffentlichungstag und Bekanntmachung des Hinweises auf die Patenterteilung: **17.01.2007**
(21) Anmeldenummer: 00125904.3
(22) Anmeldetag: 27.11.2000
(51) Int. Cl.: B60G 21/055, B60G 11/64, B60G 7/00, B60G 3/20, B60G 9/00, B60G 11/18, B60G 11/48

(54) **Federung für Fahrzeugräder**
Spring suspension arrangement for vehicle wheels
Ensemble de ressorts pour la suspension de roues d'un véhicule

(30) Priorität: 26.11.1999 DE 29920811 U
(43) Veröffentlichungstag der Anmeldung: 30.05.2001
(73) Patentinhaber: Goldschmitt techmobil AG, 74746 Höpfingen (DE)
(72) Erfinder: Mairon, Markus Dipl.-Ing., 74746 Höpfingen (DE)
(74) Vertreter: Pöhner, Wilfried Anton, Dr.

(56) Entgegenhaltungen:
- EP-A- 0 870 670
- DE-A- 2 224 315
- DE-A- 2 440 506
- DE-C- 764 339
- FR-A- 1 381 953
- FR-A- 2 467 093
- GB-A- 890 876
- US-A- 2 895 741
- US-A- 3 174 771
- US-A- 4 309 045
- US-A- 5 013 063
- US-A- 5 785 345

## Beschreibung

Die Erfindung bezieht sich auf ein Fahrzeug wie PKW, LKW, Wohnmobil, nicht selbstfahrende Anhänger udgl., mit einer Federung für die Räder, mit einer Federstrebe, die in Fahrtrichtung verläuft und an der Achse des Rades angreift und die als Kurbelarm an einem quer zur Fahrtrichtung verlaufenden Drehstab wirkt, und einem Schwinghebel, der mittelbar mit der Achse in Verbindung steht und an einem Ende mit einem endseitig drehbar gelagerten Stoßdämpfer verbunden ist.

Federungen an Fahrzeugen übernehmen die Aufgabe, die Räder, auf denen das Fahrzeug rollt, an Straßenunebenheiten abzufedern, sowie sie zu führen. Dazu greift ein Federelement an der Achse, auf der das Rad drehbar gelagert ist, an und dämpft die Vertikalbewegung des Rades und der Achse relativ zum Fahrzeugkörper, die beim Überfahren einer Bodenunebenheit entsteht. Es sind dem Fachmann verschiedenste Ausführungen der Federung bekannt, wie beispielsweise Starrachsen, die mit Blattfedern aufgehängt sind, Pendelachsen, die mit Schraubenfedern abgedämpft werden usw.. Besonders bei nicht selbstfahrenden Anhängern oder Wohnmobilen werden drehstabgefederte Pendelachsen verwendet. Dabei sind die beiden Räder an Achsrohren, in denen auch die Antriebswellen verlaufen können, aufgehängt. Eine Federstrebe, die jeweils am äußeren Ende des Achsrohres in der Nähe des Rades angreift, verläuft in Fahrtrichtung. Sie wirkt als Kurbelarm auf einen quer zur Fahrtrichtung angeordneten Drehstab ein. Beim Ein- und Ausfedern der Pendelachse wird der Drehstab von der Federstrebe tordiert und durch dessen rückstellende Kraft dieser Bewegung entgegengewirkt. Die Federstrebe übernimmt gleichzeitig die Längsführung des Rades um den Geradeauslauf zu gewährleisten sowie die Aufnahme der Fahr- und Bremsreaktioskräfte. Die Auf- und Abbewegung des Rades wird mit einem zusätzlichen Stoßdämpfer abgedämpft, um beispielsweise das Nachfedern zu unterdrücken. Er wirkt auf einen ebenfalls in Fahrtrichtung verlaufenden Schwinghebel ein, der im wesentlichen parallel verläuft und an der Achse angreift. Der Stoßdämpfer ist endseitig drehbar gelagert, um sich an die Bewegung der Achse, die im wesentlichen auf einem Kreisbahnabschnitt erfolgt, anpassen zu können. Seine Drehachse verläuft parallel zur Achse des Fahrzeugs.

Aus dem Stand der Technik ist eine Fahrzeugfederung (FR-A-1381953) bekannt, bei der ein Teleskopstoßdämpfer in axialer Richtung innerhalb einer Schraubendruckfeder positioniert ist. Die beiden Federelemente sind nach dem Prinzip des dem Fachmann bekannten McPherson-Federbeins angeordnet und mit einem Schwingarm verbunden ist. Mechanisch gesehen haben Schraubendruckfeder und Teleskopstoßdämpfer die gleichen Angriffspunkte. Als Stabilisator, insbesondere bei Kurvenfahrten dient ein Torsionsstabilisator.

Aus Dokument US-A-3174771 ist eine Achsfederung mit verlängertem Schwinghebel zur Vertikalfederung bekannt, bei der ein einzelnes Federelement (eine Schraubendruckfeder) an dem über die Fahrzeugachse hinaus verlängerten Ende des Schwingarms ansetzt.

Der Nachteil der bisher bekannten Drehstabfederung besteht darin, dass besonders bei unterschiedlichen Belastungen durch erhöhte oder wechselnde Zuladungen Zusatzfederungen notwendig sind. Die Abfederung des Rades muss entlang dem Abschnitt eines Kreisbogens erfolgen, die bekannten Federungen arbeiten jedoch linear, eine weitere Drehstabfederung ist aufgrund der nicht realisierbaren Koaxialität der Drehstäbe unmöglich. Desweiteren treten an dem bisher bekannten Stoßdämpfer erhebliche Hebelkräfte auf, da er nur über einen relativ kurzen Hebelarm mit der Achse des Rades verbunden ist und die Richtung seiner Kraftentfaltung in ungünstigem Winkel zur tatsächlichen Bewegung der Achse steht.

GB-A-890876 zeigt eine Drehstabfederung mit einer Zusatzfederung nach dem Oberbegriff des Anspruchs 1. Ausgehend vom Stand der Technik hat sich die Erfindung zur Aufgabe gestellt, eine Drehstabfederung anzugeben, bei der eine zusätzliche Abfederung des Rades vorhanden ist, sowie die Federung im wesentlichen tangential entlang des Kreisbogens, den das Rad beschreibt, erfolgen kann und die Federung an unterschiedliche Zuladungen anpassbar ist.

Erfindungsgemäß wird diese Aufgabe dadurch gelöst, dass der Schwinghebel in Fahrtrichtung verläuft, der Schwinghebel unmittelbar mit der Achse in Verbindung steht, der Schwinghebel auf dem dem Stoßdämpfer gegenüberliegenden Ende über den Anbringungsort der Achse hinaus verlängert ist, an dieser Verlängerung endseitig ein weiteres Federelement angreift, und die Drehachse des endseitig drehbar gelagerten Stoßdämpfers parallel zur Fahrzeugachse ausgerichtet ist.

Der Kerngedanke der Erfindung besteht darin, dass ein zusätzliches Federelement zur Abfederung der Auf- und Abbewegung des Rades vorhanden ist, das an einer Verlängerung des Schwinghebels, der den bisherigen Stoßdämpfer mit der Achse verbindet, angreift. Bei dem Federelement kann es sich beispielsweise um eine mechanisch wirkende Schraubenfeder handeln, oder es wird, wie weiter unten dargestellt, ausgeführt. Der Schwinghebel, der vom Stoßdämpfer kommend auf die andere Seite der Achse des Rades oder des Drehstabes verlängert ist, verläuft in Ruhestellung im wesentlichen horizontal, und das zusätzliche Federelement, das an der Karosserie des Fahrzeugs befestigt ist, greift vorteilhafterweise in dazu senkrechter Richtung an, um bestmögliche Federwirkung zu entfalten. Damit wird erreicht, dass das Federelement zumindest in einem gewissen Bereich um die Ruhestellung tangential entlang der Kreisbahn, auf der sich die Achse bewegt, an ihr angreift. Die Herstellung einer Verlängerung des Schwinghebels ist für den Fachmann auf vielfältige Weise möglich, z. B. dadurch, daß der als Metallprofil ausgeformte Schwinghebel verlängert ausgeführt wird.

Der Vorteil der Erfindung besteht darin, daß mit einfachen konstruktiven Mitteln eine zusätzliche Federung bzw. Dämpfung der Vertikalbewegung des Rades erreichbar ist. Mit einer weiter unten beschriebenen Auslegung des Federelementes ist auch die Anpaßbarkeit an unterschiedlichen Zuladungen, die besonders bei Anhängern oder Wohnmobilen von Bedeutung ist, realisierbar.

Vorteilhafte Ausgestaltungen der Erfindung sind Gegenstand von Unteransprüchen.

Für die Verbindung des Schwinghebels mit den Federelement bestehen grundsätzlich zwei Möglichkeiten. So kann die Verlängerung das Federelement von oben her angreifen, sodaß das gegenüberliegende, untere Ende des Federelementes mit der Karosserie zu verbinden ist. Umgekehrt ist es gleichermaßen möglich, daß die Verlängerung unterhalb der Achse verläuft und am Federelement von unten her angreift, wobei dann das obere, gegenüberliegende Ende an der Karosserie befestigt ist.

Ausdrücklich festzuhalten ist, daß zur Vereinfachung von Fertigung und Montage Schwinghebel und Federstrebe zumindest abschnittsweise einstückig sind. Dies bedeutet, daß die Verbindung zwischen Drehstab und Achse des Rades einstückig sein kann und gleichzeitig Schwinghebel und Federstrebe bildet. Der Schwinghebel kann sich jedoch über den Drehstab hinaus und in axialer Fortsetzung der Federstrebe erstrecken, obwohl die Befestigung mit dem Stoßdämpfer vorgenommen wird. Somit stellt ein Teil des Schwinghebels gleichzeitig die Federstrebe dar.
Schließlich ist eine räumliche Anordnung des Schwinghebels auch der Gestalt möglich, daß er im wesentlichen unterhalb der Federstrebe verläuft.

Bei einer mechanischen Schraubenfeder, aber auch bei hydraulischen oder pneumatischen Federelementen, wird vorteilhafterweise für das zusätzliche Federelement die Tonnenform gewählt, wie auch in der Zeichnung weiter unten dargestellt. Damit wird erreicht, daß wenn das Rad aus der Ruhestellung ausgelenkt ist, d.h. beim Aus- oder Einfedern, ein seitliches Abknicken des Federelements vermieden wird. Die Längsachse der endseitig fest mit der Karosserie des Fahrzeugs verbundenen Federelements steht dann nicht mehr senkrecht auf der Verlängerung des Schwinghebels, wie weiter unten beschrieben. Aufgrund der Tonnenform aber wird, besonders bei mechanischen Schraubenfedern, erreicht, daß sich das Federelement an die unterschiedlichen Auslenkungen der Federung anpassen kann und in einem größeren Bereich die maximale Federkraft auf die Verlängerung des Schwinghebels übertragen wird.

Das Federelement, das an dem verlängerten Schwinghebel angreift, kann hydraulisch oder pneumatisch oder hydropneumatisch arbeiten. Der Fachmann kann diese Arten der Federung auf vielfältige Weise realisieren, da diese Systeme im Fahrzeugbau seit langem bekannt und gebräuchlich sind. Sie bieten den Vorteil, daß an dem Schwinghebel selbst lediglich ein Kolben vorhanden ist, der, beispielsweise in einem Hydrauliksystem, Kräfte auf eine Hydraulikflüssigkeit überträgt, und die Federung selbst beabstandet vom Rad beispielsweise in einer Kugelkammer erfolgt, in die die Hydraulikflüssigkeit durch federbelastete Ventile Ein- bzw. Ausströmen kann. Auch eine Kombination von Flüssigkeits- und Luftfederung ist vom Fachmann realisierbar.

Vorteilhafterweise ist das zusätzliche Federelement derart relativ zur Verlängerung des Schwinghebels ausgerichtet, daß es von oben her im wesentlichen senkrecht auf die Verlängerung, in Ruhestellung, einwirkt. Damit wird eine größtmögliche Kraftübertragung bzw. Dämpfungs- und Federungswirkung erhalten, da das Federelement die Kraft entlang der kreisbahnförmigen Bewegung der Achse überträgt.

Bei hydraulischer und/oder pneumatischer Ausführung der zusätzlichen Federelemente ist auch die Anpassung an unterschiedliche Zuladungen in einfacher Weise möglich. Dazu wird die Federung mit einem Belastungssensor versehen, der die Belastung, d.h. das Eintauchen der Federung durch das zusätzliche Gewicht der Zuladung, registriert und entsprechend selbsttätig die Federhärte, beispielsweise eines hydraulischen Systems, nachgeregelt wird. Selbstverständlich erfolgt die zusätzliche Abfederung an beiden Rädern einer Achse oder an allen Rädern des Fahrzeugs, um ein verbessertes Fahrverhalten zu erhalten.

Prinzipiell kann das Federelement auch endseitig drehbar gelagert sein, analog den bekannten Stoßdämpfern. Damit wird eine verbesserte Anpassung an die oben beschriebene Bewegung der Achse sowie eine erhöhte Dämpfung erreicht.

Weitere Einzelheiten, Merkmale und Vorteile der Erfindung lassen sich dem nachfolgenden Beschreibungsteil entnehmen, in dem anhand einer Zeichnung ein Ausführungsbeispiel der Erfindung näher dargestellt ist. Sie zeigt:

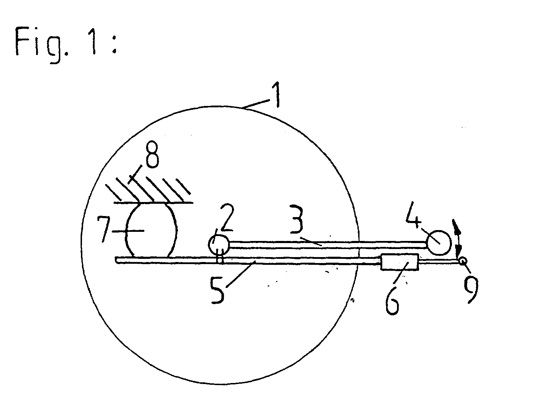

**Figur 1** eine Drehstabfederung mit einem zusätzlichen Federelement im Querschnitt.

Bei dem in Figur 1 dargestellten schematischen Ausführungsbeispiel der Erfindung handelt es sich um eine Federung für beispielsweise einen Wohnanhänger oder ein Wohnmobil. Vorteilhafterweise wird jedes Rad (1) bzw. jede Achse (2) mit einer solchen zusätzlichen Federung ausgestattet, um das Fahrverhalten des Fahrzeugs durch die zusätzliche Dämpfung der Vertikalbewegung zu verbessern. Die Achse (2) ist über eine Federstrebe (3) mit einem Drehstab (4) verbunden, wobei die Federstrebe (3) als Kurbelarm dient und die einer Torsion entgegenwirkende rückstellende Federkraft des Drehstabes (4) die Bewegung des Rades (1) auf dem Kreisbahnabschnitt dämpft. Der Pfeil gibt die Torsionsrichtung des Drehstabs (4) an. Desweiteren ist ein Schwinghebel (5) vorhanden, der im wesentlichen unterhalb der Federstrebe (3) paralell dazu ebenfalls in Fahrtrichtung verläuft und seitlich oder von unten an der Achse (2) des Rades (1) angreift. Er ist an dem Ende, das dem Drehstab (4) zugewandt ist, mit einem an sich bekannten Stoßdämpfer (6) versehen, der eine zusätzliche Dämpfung bewirkt. Der Stoßdämpfer (6) ist drehbar gelagert, wobei die Drehachse (9) parallel zur Achse (2) des Rades (1) verläuft. Um ein zusätzliches Federelement (7) an der Federung anbringen zu können ist der Schwinghebel (5) über die Achse (2) hinaus auf die andere Seite verlängert, und an diese Verlängerung greift ein zusätzliches Federelement (7) an, das an seinem anderen Ende mit der schematisch angedeuteten Karosserie (8) des Fahrzeugs fest verbunden bzw. an ihr abgestützt ist. Dabei ist es derart angeordnet, daß die lineare Federkraft zumindest um die Ruhestellung im wesentlichen tangential zum gestrichelt eingezeichneten Kreisbogenabschnitt, auf dem sich das Rad (1) bewegt, auf den verlängerten Schwinghebel (5) übertragen wird. Hier ist das Federelement (7) hydraulisch ausgeführt, und weist eine Tonnenform auf, d.h. daß der verlängerte Schwinghebel (5) einen Kolben betätigt der in einem flüssigkeitsgefüllten System auf die Hydraulikflüssigkeit einwirkt und deren Bewegung, beispielsweise von der Federung beabstandet, in einem zentralen Element, wie eine flüssigkeitsgefüllte Druckkammer, abgedämpft wird. Der Fachmann kann das Federelement (7) sowohl hydraulisch als auch pneumatisch oder hydropneumatisch auslegen. Die Tonnenform des Federelements (7) wird gewählt, damit bei einer Auslenkung der Federung aus der Ruhelage der Winkel zwischen der Längsachse des Federelements (7) und der Tangente an der Kreisbahn, auf der sich das Rad (1) auf und ab bewegt, nicht zu groß wird, d.h. das ein Ab- oder Umknicken des Federelements (7) vermieden werden soll.

Besonders bei einer mechanischen Schraubenfeder erfolgt eine gewisse Anpassung der tonnenförmigen Feder an die unterschiedlichen Winkel in ausgelenkten Zustand.

## Patentansprüche

1. Fahrzeug wie PKW, LKW, Wohnmobil, nicht selbstfahrende Anhänger udgl., mit einer Federung für die Räder, mit einer Federstrebe (3), die in Fahrtrichtung verläuft und an der Achse (2) des Rades (1) angreift und die als Kurbelarm an einem quer zur Fahrtrichtung verlaufenden Drehstab (4) wirkt, und einem weiteren Federelement (7), **dadurch gekennzeichnet, dass** ein Schwinghebel (5) an der Karosserie angelenkt ist, mit der Achse (2) in Verbindung steht und an einem Ende mit einem endseitig drehbar gelagerten Stoßdämpfer (6) verbunden ist, der sich an der Karosserie abstützt, wobei
- der Schwinghebel (5) in Fahrtrichtung verläuft,
- der Schwinghebel (5) unmittelbar mit der Achse (2) in Verbindung steht,
- der Schwinghebel (5) auf dem dem Stoßdämpfer (6) gegenüberliegenden Ende über den Anbringungsort der Achse (2) hinaus verlängert ist,
- an dieser Verlängerung endseitig das weitere Federelement (7) angreift, und
- die Drehachse des endseitig drehbar gelagerten Stoßdämpfers (6) parallel zur Fahrzeugachse (2) ausgerichtet ist.

2. Fahrzeug nach Anspruch 1, **dadurch gekennzeichnet, daß** die Verlängerung unterhalb der Achse (2) verläuft.

3. Fahrzeug nach Anspruch 1 oder 2, **dadurch gekennzeichnet, daß** Schwinghebel (5) und Federstrebe (3) abschnittsweise einstückig sind.

4. Fahrzeug nach einem der vorhergehenden Ansprüche, **dadurch gekennzeichnet, daß** der Schwinghebel (5) im wesentlichen unterhalb der Federstrebe (3) verläuft.

5. Fahrzeug nach einem der vorhergehenden Ansprüche, **dadurch gekennzeichnet, daß** das Federelement (7) tonnenförmig ist.

6. Fahrzeug nach einem der vorhergehenden Ansprüche, **dadurch gekennzeichnet, daß** das Federelement (7) hydraulisch oder pneumatisch oder hydropneumatisch arbeitet, insbesondere die Federwirkung im hydraulischen oder pneumatischen System beabstandet von der Verlängerung des Schwinghebels (5) entfaltet wird.

7. Fahrzeug nach einem der vorhergehenden Ansprüche, **dadurch gekennzeichnet, daß** das Federelement (7) in Ruhestellung im wesentlichen senkrecht zur Verlängerung ausgerichtet ist.

8. Fahrzeug nach einem der vorhergehenden Ansprüche, **dadurch gekennzeichnet, daß** ein Belastungssensor an der Federung vorhanden ist, insbesondere die Federhärte des Federelements (7) automatisch anpaßbar ist.

9. Fahrzeug nach einem der vorhergehenden Ansprüche, **dadurch gekennzeichnet, daß** das zusätzliche Federelement (7) endseitig drehbar gelagert ist, wobei dessen Drehachse parallel zur Achse verläuft.

## Claims

1. Vehicle, such as a car, truck, camper van, non-self-propelled trailer and the like, comprising a suspension for the wheels, with a spring strut(3) , which extends in the travel direction and acts on the axle (2) of the wheel (1), and which acts as a crank arm on a torsion bar (4), and a further spring element (7), **characterised in that** a rocker arm (5) is rotatably mounted on the body, and is in contact with the axle (2) and is connected at one end to a shock absorber (6), which is supported on the body, wherein
- the rocker arm (5) extends in the travel direction,
- the rocker arm (5) is in direct contact with the axle (2)
- the rocker arm (5), at that end opposite the shock absorber (6), is extended beyond the point of attachment of the axle (2)
- the further spring element (7) acts on the end of this extension, and
- the axis of rotation of the shock absorber (6), which is rotatably mounted at its end, is oriented parallel to the vehicle axis.

2. Vehicle according to claim 1, **characterised in that** the extension extends beneath the axle (2).

3. Vehicle according to claim 1, **characterised in that** the rocker arm (5) and spring strut (3) are of one-piece in sections.

4. Vehicle according to one of the preceding claims, **characterised in that** the rocker arm (5) extends essentially below the spring strut (3).

5. Vehicle according to one of the preceding claims, **characterised in that** the spring element (7) is barrel-shaped.

6. Vehicle according to one of the preceding claims, **characterised in that** the spring element (7) operates hydraulically or pneumatically or hydropneumatically, in particular the spring action in the hydraulic or pneumatic system is developed at a distance from the extension of the rocker arm (5).

7. Vehicle according to one of the preceding claims, **characterised in that** the spring element (7) in the inactive position is oriented essentially perpendicular to the extension.

8. Vehicle according to one of the preceding claims, **characterised in that** a load sensor is present on the suspension, in particular the spring hardness of the spring element (7) is automatically adjustable.

9. Vehicle according to one of the preceding claims, **characterised in that** an additional spring element (7) is mounted rotatably at its end, its axis of rotation extending parallel to the axle.

## Revendications

1. Véhicule tel qu'une voiture de tourisme, un camion, une remorque non motrice ou autre chose similaire, avec une suspension pour les roues, avec une traverse de suspension (3) orientée en direction du déplacement et s'accrochant à l'axe (2) de la roue (1) et agissant en tant qu'arbre de manivelle sur une tige pivotante (4) disposée en travers de la direction du déplacement, et d'un autre élément de suspension (7), **caractérisé par le fait**
• **qu'**un levier oscillant est dévié sur la carrosserie, est relié à l'axe (2) et est relié à une extrémité avec un pare-chocs (6) amorti à son extrémité de façon pivotante, qui s'appuie sur la carrosserie, sachant
• le levier oscillant (5) est orienté dans la direction du déplacement;
• **que** le levier oscillant (5) est relié immédiatement à l'axe (2),
• le levier oscillant (5) est prolongé au-delà du point d'attache de l'axe (2) sur l'extrémité opposée au pare-chocs (6),
• **que** l'autre élément de suspension (7) s'accroche à l'extrémité de ce prolongement, et que
• l'axe pivotant du pare-chocs (6) amorti de façon pivotante à son extrémité est orienté parallèlement à l'axe du véhicule (2).

2. Véhicule selon la revendication 1, **caractérisé par le fait que** le prolongement passe en dessous de l'axe (2).

3. Véhicule selon la revendication 1 ou 2, **caractérisé par le fait que** le levier oscillant (5) et la traverse de suspension (3) sont à certains endroits d'une seule pièce.

4. Véhicule selon une des revendications précédentes, **caractérisé par le fait que** le levier oscillant (5) passe pour l'essentiel en dessous de la traverse de suspension (3).

5. Véhicule selon une des revendications précédentes, **caractérisé par le fait que** l'élément de suspension (7) a la forme d'un tonneau.

6. Véhicule selon une des revendications précédentes, **caractérisé par le fait que** l'élément de suspension (7) fonctionne de façon hydraulique ou pneumatique ou hydropneumatique, dont en particulier l'effet de suspension dans le système hydraulique ou pneumatique est développé à distance du prolongement du levier oscillant (5).

7. Véhicule selon une des revendications précédentes, **caractérisé par le fait que** l'élément de suspension (7) en position de repos est orienté pour l'essentiel à la verticale du prolongement.

8. Véhicule selon une des revendications précédentes, **caractérisé par le fait qu'**il y a un capteur de charge sur la suspension, qui rend automatiquement adaptable notamment la dureté de l'amortissement de l'élément de suspension (7).

9. Véhicule selon une des revendications précédentes, **caractérisé par le fait que** l'élément supplémentaire de suspension (7) est amorti à son extrémité de façon pivotante, sachant que son axe pivotant court parallèlement à l'axe.
